(19) Europäisches Patentamt
European Patent Office
Office européen des brevets

(11) **EP 2 526 146 B1**

(12) **EUROPEAN PATENT SPECIFICATION**

(45) Date of publication and mention
of the grant of the patent:
**26.11.2014 Bulletin 2014/48**

(51) Int Cl.:
***C08K 5/00*** *(2006.01)*

(21) Application number: **11700437.4**

(22) Date of filing: **19.01.2011**

(86) International application number:
**PCT/EP2011/050642**

(87) International publication number:
**WO 2011/089133 (28.07.2011 Gazette 2011/30)**

(54) **POLYPROPYLENE COPOLYMERS WITH SPECIFIC CRYSTAL NUCLEATION**

POLYPROPYLENCOPOLYMERE MIT SPEZIFISCHER KRISTALLISATIONSKEIMBILDUNG

COPOLYMÈRES DE POLYPROPYLÈNE DOTÉS D'UNE NUCLÉATION CRISTALLINE SPÉCIFIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2010 EP 10151444**

(43) Date of publication of application:
**28.11.2012 Bulletin 2012/48**

(73) Proprietor: **Borealis AG
1220 Vienna (AT)**

(72) Inventors:
• **DOSHEV, Petar
A-4040 Linz (AT)**
• **KHEIRANDISH, Saeid
41468 Neuss (DE)**
• **GAHLEITNER, Markus
A-4501 Neuhofen/Krems (AT)**

• **PUKANSZKY, Béla
H-1074 Budapest (HU)**
• **MENYHARD, Alfred
H-1112 Budapest (HU)**

(74) Representative: **Maiwald Patentanwalts GmbH
Elisenhof
Elisenstrasse 3
80335 München (DE)**

(56) References cited:
**EP-A1- 1 923 200          WO-A1-2007/045590
JP-A- 2009 299 039**

• **BLOMENHOFER M ET AL: "DESIGNER
NUCLEATING AGENTS FOR
POLYPROPYLENE", MACROMOLECULES,
AMERICAN CHEMICAL SOCIETY, US LNKD-
DOI: 10.1021/MA0473317, vol. 38, no. 9, 3 May 2005
(2005-05-03), pages 3688-3695, XP001230197,
ISSN: 0024-9297**

**Description**

The present invention relates to the use of a specific $\alpha$-crystal nucleating agent for improving the impact strength and transparency of a polypropylene composition. In particular, the present invention relates to use of a soluble $\alpha$-crystal nucleating agent selected from benzene-trisamides, 1,3:2,4-bis-(3,4-dimethylbenzylidene) sorbitol, 1,3:2,4-dibenzylidensorbitol and/or bis-(3,4-dimethylbenzylidene) sorbitol showing a sequence of dissolution in heating and recrystallization in cooling, for improving the impact strength, stiffness and transparency of a polypropylene composition, which polypropylene composition comprises an isotactic propylene random copolymer showing a single-phase crystal structure as determined by electron microscopy and which isotactic propylene random copolymer comprises from 90.0 to 99.0 % by weight of propylene and from 1.0 to 10.0 % by weight of ethylene and/or higher $\alpha$-olefins with 4 to 8 carbon atoms, wherein said polypropylene composition has a Charpy notched impact strength $NIS_N$, a tensile modulus $TensMod_N$ and a transparency $Haze_N$ and wherein the polypropylene composition without soluble $\alpha$-crystal nucleating agent has a Charpy notched impact strength $NIS_V$, a tensile modulus $TensMod_V$ and a transparency $Haze_V$, the Charpy notched impact strength being determined in each case according to ISO 179 1 eA on injection molded specimens of 80x10x4 mm$^3$, the tensile modulus being determined in each case according to ISO 527-2 at +23 °C on injection molded specimen (type 1B, 4 mm thickness) and the transparency being determined in each case as haze according to ASTM D 1003-07 on injection molded plaque samples of 60x60x2 mm$^3$ and wherein

$$\Delta(NIS) = (NIS_N - NIS_V)/NIS_V \text{ and } \Delta(NIS) \geq 0.25$$

$$\Delta(TensMod) = (TensMod_N - TensMod_V)/TensMod_V$$

and

$$\Delta(TensMod) \geq 0.08$$

$$\Delta(Haze) = -(Haze_N - Haze_V)/Haze_V \text{ and } \Delta(Haze) \geq 0.50.$$

Being a predominantly crystalline polymer, isotactic polypropylene derives its mechanical and optical performance from the amount and nature of crystalline phase being present in the final product. Apart from designing the polymer itself, like selecting the average molecular weight, the molecular weight distribution, the type and relative amount of comonomer(s) and the comonomer distribution, the crystalline phase will also be influenced by the presence of crystal nucleating agents. It is well known that different types of crystal nucleating agents will affect the crystal structure of the polymer differently, enhancing the presence and relative amounts of specific crystal modifications of isotactic polypropylene, like the monoclinic $\alpha$-modification, the hexagonal $\beta$-modification and the orthorhombic $\gamma$-modification. While the polymer structure will affect the degree of expression of a specific nucleation, the type of crystal formed will be determined by the nucleating agent.

Such nucleating agents for isotactic polypropylene can also be separated into two classes with physically distinct behaviour:

-    particulate nucleating agents with a conventional dispersion mechanism, for which particle size and polarity difference to polymer are decisive. Examples for this class include inorganic nucleating agents like talc, but also organic nucleating agents like sodium benzoate, organophosphates and salts of p(tert-butylbenzoic acid), as well as polymeric nucleating agents like poly(tetrafluoro-ethylene)

-    soluble nucleating agents with a sequence of dissolution upon heating and recrystallization upon cooling defining the degree of dispersion. In the latter case, solubility and the resulting crystal shape are decisive for the efficiency. Examples include sorbitol derivatives, nonitol derivatives and benzene-trisamides.

A class of isotactic polypropylenes especially requiring modification by nucleating agents comprises polypropylene random copolymers being characterized by a homogeneous structure without phase separation and by a low to moderate comonomer content. Commonly used comonomers for said random copolymers are ethylene and/or higher $\alpha$-olefins with 4 to 8 carbon atoms. Such random copolymers will exhibit a decrease of the spherulitic growth speed and a reduced overall crystallinity upon processing, resulting in better optical properties but at the same time reduced mechanical strength and impaired long-term stability.

Impact strength improvement of isotactic polypropylenes is usually achieved by adding an elastomeric component which forms a second (disperse) phase in the resulting material. Thereby are necessarily light scattering centers created, which decrease transparency (i.e. increase haze). Even when balanced with either base polymer design or composition design, the transparency levels of homogeneous, single-phase polypropylene materials cannot be achieved.

It is further known that the impact strength of isotactic polypropylene compositions can be increased significantly by β-nucleation due to the higher ductility of the β-modification of polypropylene crystals.

In EP 682066 A1 the impact strength improvement of polypropylene homo- and copolymers by selective β-nucleation with salts of dibasic carboxylic acids like Ca-pimelate is described. The predominant presence of the β-modification however makes the polymer less stiff and reduces the transparency massively.

In EP 885926 A2 polypropylene resin compositions based on a binary blend of random copolymers with 90-99 wt% propylene and with 55-90% propylene are described for achieving a combination of good stiffness and impact strength in combination with α-nucleation. Due to the limited miscibility between the two components, highest transparency levels cannot be achieved with such compositions.

The same applies for WO 2008/088995 A1, describing compositions suitable for thin-walled injection molded articles. The α-nucleated compositions are based on a random copolymer, but also comprise a propylene-ethylene copolymer having substantially isotactic C3 sequences forming a second phase and mostly defining the impact strength.

WO 2007/045590 A1 relates to an isotactic polypropylene copolymer suitable for injection molding applications, containing nucleating agents such as dimethyl dibenzylidene sorbitol.

JP 2009 299039 describes a polypropylene resin compositions having improved transparency and mechanical properties, containing specific nucleating agents.

Blomenhofer M. et al. "Designer nucleating agents for polypropylene", Macromolecules, Am. Chem. Soc. 38 (9), 2005, describes a family of organic compounds, in particular substituted 1,3,5-benzenetrisamides, that are capable of selectively and extremely efficiently nucleating the growth of the common α-crystal modification of the major industrial polymer isotactic polypropylene.

It was therefore desirable to find combinations of isotactic polypropylene random copolymers with specific α-crystal nucleating agents, simultaneously demonstrating high levels of impact strength and transparency while retaining or even increasing stiffness.

This could be achieved by combining an isotactic propylene random copolymer showing a single-phase crystal structure with a soluble α-crystal nucleating agent, said nucleating agent demonstrating a sequence of dissolution in heating and recrystallization in cooling to improve the degree of dispersion.

The positive effect of this suitable combination can be best expressed by the relative improvements in impact strength, tensile modulus and transparency. A polypropylene composition comprising the isotactic propylene random copolymer showing a single-phase crystal structure as determined by electron microscopy and the soluble α-crystal nucleating agent has a Charpy notched impact strength $NIS_N$, while the polypropylene composition without the soluble α-crystal nucleating agent demonstrating a sequence of dissolution in heating and recrystallization in cooling as determined by melt rheology has a Charpy notched impact strength $NIS_V$, the Charpy notched impact strength being determined in each case according to ISO 179 1eA on injection molded specimens of 80x10x4 $mm^3$ prepared in line with ISO 1873-2. For the impact strength improvement, a value of Δ(NIS) is defined as

$$\Delta(NIS) = (NIS_N - NIS_V)/NIS_V$$

For being considered significant, Δ(NIS) must be equal to or higher than 0.25, preferably equal to or higher than 0.30.

Furthermore, a polypropylene composition comprising the isotactic propylene random copolymer showing a single-phase crystal structure as determined by electron microscopy and the soluble α-crystal nucleating agent has a tensile modulus $TensMod_N$, while the polypropylene composition without the soluble α-crystal nucleating agent demonstrating a sequence of dissolution in heating and recrystallization in cooling as determined by melt rheology has a tensile modulus $TensMod_V$, the tensile modulus being determined in each case according to ISO 527-2 at +23 °C on injection molded specimen (type 1 B, 4 mm thickness) prepared by injection moulding in line with ISO 1873-2. For the tensile modulus improvement, a value of Δ(TensMod) is defined as

$$\Delta(TensMod) = (TensMod_N - TensMod_V)/TensMod_V$$

For being considered significant, $\Delta$(TensMod) must be equal to or higher than 0.08, preferably equal to or higher than 0.10.

Even further, a polypropylene composition comprising the isotactic propylene random copolymer showing a single-phase crystal structure as determined by electron microscopy and the soluble $\alpha$-crystal nucleating agent has a transparency Haze$_N$, while the polypropylene composition without the soluble $\alpha$-crystal nucleating agent demonstrating a sequence of dissolution in heating and recrystallization in cooling as determined by melt rheology has a transparency Haze$_V$, the transparency being determined in each case as haze according to ASTM D 1003-07 on injection molded plaque samples of 60x60x2 mm prepared prepared by injection molding in line with ISO 1873-2. For the transparency improvement, a value of $\Delta$(Haze) is defined as

$$\Delta(\text{Haze}) = -\ (\text{Haze}_N - \text{Haze}_V)/\text{Haze}_V.$$

For being considered significant, $\Delta$(Haze) must be equal to or higer than 0.50, preferably equal to or higher than 0.55, most preferably equal to or higher than 0.60.

It should be noted, that throughout this application, transparency is determined and expressd as haze according to ASTM D 1003-07. Of course, high levels of transparency require low values of haze.

Polypropylene compositions from this combination of isotactic propylene random copolymers with specific $\alpha$-crystal nucleating agents demonstrating a high level of impact strength in combination with high transparency are generally suitable for injection molding, extrusion blow molding and injection stretch blow molding applications. Such polypropylene compositions are particularly suitable for producing articles having an average wall thickness of 2 mm or less by injection molding, extrusion blow molding and injection stretch blow molding.

Suitable propylene random copolymers showing a homogeneous single-phase crystal structure are copolymers comprising from 90.0 to 99.0 % by weight of propylene and from 1.0 to 10.0 % by weight of ethylene and/or higher $\alpha$-olefins with 4 to 8 carbon atoms. Especially suitable are copolymers comprising from 92.0 to 98.0 % by weight of propylene monomer and from 2.0 to 8.0 % by weight of ethylene and/or higher $\alpha$-olefins with 4 to 8 carbon atoms. More specifically, the higher $\alpha$-olefins suitable as comonomers in said copolymers preferably are 1-butene or 1-hexene, used as only comonomer or in combination with ethylene. Most preferred are copolymers comprising only propylene and ethylene as monomers.

The homogeneous single-phase crystal structure can be ascertained by electron microscopy. An especially suitable method is transmission electron microscopy after contrasting by ruthenium tetroxide as described by Pölt et al. in Journal of Applied Polymer Science vol. 78 (2000) pages 1152-61. A sample thickness of 50-100 nm and magnifications of 10.000 to 30.000 have been found to be suitable to judge the phase morphology in terms of the existence of a homogeneous single-phase crystal structure and the absence of disperse particles of a second phase like an elastomer or polyethylene.

With the soluble $\alpha$-crystal nucleating agents which are used according to the present invention it is possible to achieve an already high level of transparency of the polypropylene composition.

For achieving best levels of transparency it is desirable that the comonomers are incorporated in said isotactic copolymers mostly as isolated units, corresponding to a high degree of randomness. Such randomness can be expressed by a cluster index as calculated from $^{13}$C-NMR spectroscopy of the polymer in solution, which for the polypropylene random copolymers of the invention shall be below 10.5, preferably below 10.1.

The crystal melting point for isotactic polypropylene copolymers is reduced by the random incorporation of comonomers. Polypropylene random copolymers used shall have a melting point $T_m$ as determined by differential scanning calorimetry according to ISO 11357-3 below 162°C, preferably below 160°C. Especially preferred ranges of the melting point for said polymers are from 135 to 161°C, like from 140 to 159°C.

Also the polypropylene compositions of the present disclosure shall have a melting point of $T_m$ as determined by differential scanning calorimetry according to ISO 11357-3 below 162°C, preferably below 160°C. Especially preferred ranges of the melting point for said polymers are from 135 to 161°C, like from 140 to 159°C.

For being applicable in the target application areas of injection molding, extrusion blow molding and injection stretch blow molding, these polypropylene random copolymers shall have a melt flow rate as determined according to ISO 1133 at 230°C and 2.16 kg load (MFR2) from 0.5 to 200 g/10min, preferably from 1.0 to 150 g/10min, most preferably from 2.0 to 100 g/10min. This corresponds to a weight average molecular weight $M_w$ as calculated from the molecular weight distribution determined by size exclusion chromatography according to ISO 16014 from 80,000 to 950,000 g/mol, preferably from 100,000 to 850,000 g/mol, most preferably from 120,000 to 750,000 g/mol.

Also the polypropylene compositions of the present disclosure shall have a melt flow rate as determined according to ISO 1133 at 230°C and 2.16 kg load (MFR2) from 0.5 to 200 g/10min, preferably from 1.0 to 150 g/10min, most preferably from 2.0 to 100 g/10min.

In order to achieve the desired combination of mechanical and optical properties it is further preferred that the polypropylene random copolymers shall have a narrow to medium broad molecular weight distribution. More specifically it is desired that the ratio of weight and number average molecular weight, $M_w/M_n$, as calculated from the molecular weight distribution determined by size exclusion chromatography according to ISO 16014 ranges from 2.2 to 6.0, preferably from 2.5 to 5.0.

Suitable production processes for the mentioned polypropylene random copolymers are generally known to those skilled in the art. For the production of these isotactic polypropylene comopolymers single- or multi-stage polymerization processes based on a heterogeneous Ti/Mg type catalyst (Ziegler/Natta type) or a metallocene (single-site) type catalyst can be employed. The catalyst system will normally be complemented by a co-catalyst component and at least one electron donor (internal and/or external electron donor, preferably at least one external donor) controlling the stereoregularity of the produced polymer. Suitable catalysts are in particular disclosed in US 5,234,879, WO 92/19653, WO 92/19658 and WO 99/33843. Typically the co-catalyst is an Al-alkyl based compound. Preferred external donors are the known silane-based donors, such as dicyclopentyl dimethoxy silane or cyclohexyl methyldimethoxy silane.

Preferably, a multi-stage process is applied in which both the molecular weight and the comonomer content can be regulated independently in the different polymerisation stages. Such processes are for example described in more detail in EP 887379 A1, EP 1032599 A1 and EP 1155048 A1.

For achieving the desired combination of molecular weight distribution and random incorporation of comonomers, polymerization procedures as described in EP 2042552 A1 and EP 2030996 A1 are especially suitable.

Soluble α-crystal nucleating agents are characterized by demonstrating a sequence of dissolution in heating and recrystallization in cooling to improve the degree of dispersion. Methods for determining said dissolution and recrystallization are described for example by Kristiansen et al. in Macromolecules 38 (2005) pages 10461-10465 and by Balzano et al. in Macromolecules 41 (2008) pages 5350-5355. In detail, the dissolution and recrystallization can be monitored by means of melt rheology in dynamic mode as defined by ISO 6271-10:1999.

Examples for such soluble α-crystal nucleating agents include sorbitol derivatives, nonitol derivatives and benzene-trisamides. Suitable sorbitol derivatives are di(alkylbenzylidene)sorbitols like 1,3:2,4-bis-(3,4-dimethylbenzylidene) sorbitol or 1,3:2,4-dibenzylidenesorbitol or bis-(3,4-dimethylbenzylidene)sorbitol. Suitable nonitol derivatives include 1,2,3-trideoxy-4,6:5,7-bis-O-[(4-propyl-phenyl)methylene]-nonitol, while suitable benzene-trisamides include substituted 1,3,5-benzenetrisamides like N,N',N''-tris-tert-Butyl-1,3,5-benzenetricarboxamide or N,N',N''-tris-Cyclohexyl-1,3,5-benzene-tricarboxamide.

For achieving the desired property combination, the soluble α-crystal nucleating agents are combined with the polypropylene random copolymers in a concentration of 50 to 5000 ppm by weight, preferably 100 to 4000 ppm by weight. In such a composition the isotactic propylene random copolymer comprises at least 99% by weight of the composition.

According to one embodiment described herein the polypropylene composition comprises at least 99 wt% of isotactic propylene random copolymer and 700 to 3000 ppm by weight of 1,3:2,4-bis-(3,4-dimethylbenzylidene) sorbitol (CAS No. 135861-56-2).

According to a further embodiment described herein the polypropylene composition comprises at least 99 wt% of isotactic propylene random copolymer and 1500 to 4500 ppm by weight of 1,2,3-trideoxy-4,6:5,7-bis-O-[(4-propylphenyl)methylene]-nonitol (CAS No. 882073-43-0).

According to a still further embodiment descibed herein the polypropylene composition comprises at least 99 wt% of isotactic propylene random copolymer and 100 to 1000 ppm by weight of N,N',N''-tris-tert-Butyl-1,3,5-benzene-tricarboxamide (CAS No. 745070-61-5).

In addition to said specific nucleating agents also commonly used additives like phenolic antioxidants phosphorus-containing antioxidants, C-radical scavengers, acid scavengers, UV-stabilisers, antistatic agents, slip agents, and antiblocking agents can be added. These components are well known for the skilled person and may be used in the common amounts and are selected by the skilled person as they are required and according to the respective purpose for which the polyolefin compositions shall be used. Accordingly, it is also understood that the sum of the weights of the polypropylene random copolymer and nucleating agent do usually not exactly add up to 100 wt%, but somewhat less, depending upon the amount of additives, which - in total - do usually not exceed 1.0 wt%.

It is a further object of the invention to provide a way to simultaneously improve the level of impact strength, stiffness and transparency of polypropylene compositions.

The aforementioned object is achieved by the use of a soluble α-crystal nucleating agent showing a sequence of dissolution in heating and recrystallization in cooling, for improving the impact strength, stiffness and transparency of a polypropylene composition, which polypropylene composition comprises an isotactic propylene random copolymer showing a single-phase crystal structure as determined by electron microscopy and which isotactic propylene random copolymer comprises from 90.0 to 99.0 % by weight of propylene and from 1.0 to 10.0 % by weight of ethylene and/or higher α-olefins with 4 to 8 carbon atoms, wherein said polypropylene composition has a Charpy notched impact strength $NIS_N$, a tensile modulus $TensMod_N$ and a transparency $Haze_N$ and wherein the polypropylene composition without

soluble $\alpha$-crystal nucleating agent has a Charpy notched impact strength $NIS_V$, a tensile modulus $TensMod_V$ and a transparency $Haze_V$, the Charpy notched impact strength being determined in each case according to ISO 179 1eA on injection molded specimens of 80x10x4 mm$^3$, the tensile modulus being determined in each case according to ISO 527-2 at +23 °C on injection molded specimen (type 1B, 4 mm thickness) and the transparency being determined in each case as haze according to ASTM D 1003-07 on injection molded plaque samples of 60x60x2 mm$^3$ and wherein $\Delta(NIS)$ = $(NIS_N - NIS_V)/NIS_V$ and $\Delta(NIS) \geq 0.25$ $\Delta(TensMod)$ = $(TensMod_N - TensMod_V)/TensMod_V$ and $\Delta(TensMod) \geq 0.08$

$$\Delta(Haze) = -\ (Haze_N - Haze_V)/Haze_V \text{ and } \Delta(Haze) \geq 0.50.$$

It is a still further object of this disclosure to provide a process for producing polypropylene compositions having improved levels impact strength, stiffness and transparency.

The aforementioned object is achieved by mixing (A) an isotactic propylene random copolymer showing a single-phase crystal structure, said polymer comprising from 90.0 to 99.0 % by weight of propylene and from 1.0 to 10.0 % by weight of ethylene and/or higher $\alpha$-olefins with 4 to 8 carbon atoms with (B) a soluble $\alpha$-crystal nucleating agent showing a sequence of dissolution in heating and recrystallization in cooling, melting and granulating said mixture, wherein said polypropylene composition has a Charpy notched impact strength $NIS_N$, a tensile modulus $TensMod_N$ and a transparency $Haze_N$ and wherein the polypropylene composition without soluble $\alpha$-crystal nucleating agent has a Charpy notched impact strength $NIS_V$, a tensile modulus $TensMod_V$ and a transparency $Haze_V$, the Charpy notched impact strength being determined in each case according to ISO 179 1eA on injection molded specimens of 80x10x4 mm$^3$, the tensile modulus being determined in each case according to ISO 527-2 at +23 °C on injection molded specimen (type 1B, 4 mm thickness) and the transparency being determined in each case as haze according to ASTM D 1003-07 on injection molded plaque samples of 60x60x2 mm$^3$ and wherein $\Delta(NIS)$ = $(NIS_N - NIS_V)/NIS_V$ and $\Delta(NIS) \geq 0.25$ $\Delta(TensMod)$ = $(TensMod_N - TensMod_V)/TensMod_V$ and $\Delta(TensMod) \geq 0.08$

$$\Delta(Haze) = -\ (Haze_N - Haze_V)/Haze_V \text{ and } \Delta(Haze) \geq 0.50.$$

For mixing, a conventional compounding or blending apparatus, e.g. a Banbury mixer, a 2-roll rubber mill, Buss-co-kneader or a twin screw extruder may be used. The twin screw extruder may be co-rotating or counter-rotating, preferably co-rotating. Preferably, the composition will be prepared by blending the additives together with the polymeric material at a temperature, which is sufficiently high to soften and plasticize the polymer. The temperatures and pressures used in the operation of the extruder are known in the art. Typically the temperature may be selected from the range of 150 to 350 °C. The pressure used for extrusion preferably is 50 to 500 bar. The polymer materials recovered from the extruder are usually in the form of pellets. These pellets are then preferably further processed, e.g. by injection moulding to generate articles and products of the inventive compositions.

In the following the present invention is further illustrated by means of non-limiting examples.

**Examples**

Definition of the test methods:

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Charpy notched impact test

Charpy impact strength was determined according to ISO 179-1eA:2000 on V-notched samples of 80x10x4 mm$^3$ at +23 °C. The test specimens were prepared by injection moulding according to ISO 1873-2.

c) Tensile test

Tensile tests are performed according to ISO 527-2 at +23 °C on injection molded specimen (type 1 B, 4 mm thickness) prepared by injection moulding according to ISO 1873-2.

The tensile modulus (E-modulus) was calculated from the linear part of said tensile test results, conducting that part of the measurement with an elongation rate of 5 mm/min.

For determining tensile stress at yield (in MPa), tensile strain at yield (in %), tensile strength (in MPa), tensile strain at tensile strength (in %), tensile stress at break (in MPa) and tensile strain at break (in %) the aforementioned tensile test according to ISO 527-2 at +23 °C was continued with an elongation rate of 50 mm/min until the specimen broke.

d) Haze

The haze is determined on injection molded plaque samples of 60x60x2 mm$^3$ according to ASTM D 1003-07. The samples have been prepared prepared by injection molding in line with ISO 1873-2.

e) NMR-spectroscopy measurements:

The comonomer content was determined by quantitative nuclear magnetic resonance ($^{13}$C-NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

f) Molecular weight distribution

Number average molecular weight (Mn), weight average molecular weight (M$_w$) and molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

g) Differential Scanning Calorimetry (DSC)

DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

Polymers

RB307MO is a propylene-ethylene random copolymer having an ethylene content of 3.5 wt%, a melting point of 148°C and an MFR$_2$ of 2.0 g/10min commercially available from Borealis Polyolefine GmbH, Austria. RE906CF is a propylene-ethylene random copolymer having an ethylene content of 2.8 wt%, a melting point of 151°C and an MFR$_2$ of 12 g/10min commercially available from Borealis Polyolefine GmbH, Austria. HC207MO is a polypropylene homopolymer having a melting point of 164°C and an MFR$_2$ of 2.0 g/10min commercially available from Borealis Polyolefine GmbH, Austria.

HE365FB is a polypropylene homopolymer having a melting point of 167°C and an MFR$_2$ of 12 g/10min commercially available from Borealis Polyolefine GmbH, Austria.

The molecular weight distribution parameters and comonomer cluster index values for all polymers are listed in table 1.

Table 1

| Polymer | Mw | Mn | Mw/Mn | Cluster index |
|---|---|---|---|---|
| | kg/mol | kg/mol | - | $^{13}$C-NMR |
| RB307MO | 317 | 85 | 3.74 | 10.02 |
| RE906MO | 195 | 60 | 3.25 | 10.02 |
| HC207MO | 252 | 68 | 3.70 | n.d. |
| HE354FB | 223 | 47 | 4.74 | n.d. |
| (n.d. - not defined, homopolymer) | | | | |

Nucleating agents

Millad NX8000 is the soluble $\alpha$-crystal nucleating agent 1,2,3-trideoxy-4,6:5,7-bis-O-[(4-propylphenyl)methylene]-nonitol (CAS No. 882073-43-0) commercially available from Miliken Co., USA.

Millad 3988 is the soluble $\alpha$-crystal nucleating agent 1,3:2,4-bis-(3,4-dimethylbenzylidene) sorbitol (CAS No. 135861-56-2) commercially available from Miliken Co., USA.

Irgaclear XT386 is the soluble $\alpha$-crystal nucleating agent N,N',N"-tris-tert-Butyl-1,3,5-benzenetricarboxamide (CAS No. 745070-61-5) commercially available from Ciba Specialty Chemicals

Adekastab NA21 E is a particulate $\alpha$-crystal nucleating agent consisting of 60 wt% Hydroxybis (2,4,8,10-tetra-tert. butyl-6-hydroxy-12H-dibenzo(d,g)(1,3,2) dioxaphosphocin 6-oxidato) aluminium (CAS No. 151841-65-5) and 40 wt% Li-myristate (CAS No. 20336-96-3) commercially available from Adeka Palmarole, France.

Compositions

All compositions as listed in the tables 2 (for inventive and comparative compositions based on propylene-ethylene random copolymers) and 3 (for comparative compositions based on propylene homopolymers) were prepared by melt compounding in a Thermo Prism TSE24 twin screw extruder (screw diameter 24 mm, L/D ratio 40) with two high intensity mixing segments at temperatures between 190 °C and 240 °C at a throughput of 10 kg/h and a screw speed of 50 rpm.

Table 2

| Number | Polymer | Nucleant | concentration | Tc/DSC | TensMod | Δ(TensMod) | NIS | Δ(NIS) | Haze | Δ(Haze) |
|---|---|---|---|---|---|---|---|---|---|---|
| - | grade | type | ppm | °C | GPa | - | kJ/m² | - | % | - |
| CE 1 | RB307MO | none | 0 | 100,0 | 0,84 | 0,00 | 7,85 | 0,00 | 72 | 0,00 |
| Ex 1 | RB307MO | Millad 3988 | 1000 | 111,3 | 0,91 | 0,08 | 16,98 | 1,16 | 30 | 0,58 |
| Ex 2 | RB307MO | Millad 3988 | 2000 | 112,3 | 0,92 | 0,10 | 14,71 | 0,87 | 22 | 0,69 |
| Ex 3 | RB307MO | NX8000 | 2000 | 114,8 | 0,92 | 0,10 | 15,07 | 0,92 | 28 | 0,61 |
| Ex 4 | RB307MO | NX8000 | 4000 | 115,1 | 0,93 | 0,11 | 9,86 | 0,26 | 15 | 0,79 |
| Ex 5 | RB307MO | XT386 | 150 | 108,1 | 0,96 | 0,14 | 16,37 | 1,08 | 26 | 0,64 |
| Ex 6 | RB307MO | XT386 | 500 | 110,1 | 1,01 | 0,20 | 10,63 | 0,35 | 20 | 0,72 |
| CE 2 | RB307MO | NA-21 | 500 | 110,5 | 0,88 | 0,05 | 14,25 | 0,81 | 58 | 0,19 |
| CE 3 | RB307MO | NA-21 | 1000 | 112,3 | 0,89 | 0,06 | 12,96 | 0,65 | 37 | 0,49 |
| CE 4 | RE906MO | none | 0 | 105,1 | 1,03 | 0,00 | 2,45 | 0,00 | 75 | 0,00 |
| Ex 9 | RE906MO | NX8000 | 2000 | 117,6 | 1,15 | 0,12 | 3,21 | 0,31 | 25 | 0,67 |
| Ex 10 | RE906MO | NX8000 | 4000 | 119,8 | 1,2 | 0,17 | 3,44 | 0,40 | 15 | 0,80 |
| Ex 11 | RE906MO | XT386 | 150 | 111,8 | 1,14 | 0,11 | 3,39 | 0,38 | 28 | 0,63 |
| Ex 12 | RE906MO | XT386 | 500 | 114,0 | 1,16 | 0,13 | 3,34 | 0,36 | 22 | 0,71 |
| CE 5 | RE906MO | NA-21 | 500 | 113,6 | 1,09 | 0,06 | 3,57 | 0,46 | 60 | 0,20 |
| CE 6 | RE906MO | NA-21 | 1000 | 114,5 | 1,11 | 0,08 | 4,04 | 0,65 | 39 | 0,48 |

Table 3

| Number | Polymer | Nucleant | concentration | Tc/DSC | TensMod | Δ(TensMod) | NIS | Δ(NIS) | Haze | Δ(Haze) |
|---|---|---|---|---|---|---|---|---|---|---|
| - | grade | type | ppm | °C | GPa | - | kJ/m$^2$ | - | % | - |
| CE 7 | HC207TF | none | 0 | 111,6 | 1,58 | 0,00 | 2,24 | 0,00 | 88 | 0,00 |
| CE 8 | HC207TF | Millad 3988 | 2000 | 126,0 | 1,86 | 0,18 | 1,96 | -0,12 | 34 | 0,61 |
| CE 9 | HC207TF | NX8000 | 2000 | 121,1 | 1,69 | 0,07 | 1,84 | -0,18 | 32 | 0,64 |
| CE 10 | HC207TF | XT386 | 500 | 123,5 | 1,86 | 0,18 | 2,17 | -0,03 | 34 | 0,61 |
| CE 11 | HC207TF | NA-21 | 1000 | 122,6 | 1,75 | 0,11 | 2,21 | -0,01 | 72 | 0,18 |
| CE 12 | HE365FB | none | 0 | 113,0 | 1,62 | 0,00 | 2,00 | 0,00 | 82 | 0,00 |
| CE 13 | HE365FB | Millad 3988 | 2000 | 128,0 | 1,85 | 0,14 | 1,33 | -0,34 | 31 | 0,62 |
| CE 14 | HE365FB | NX8000 | 2000 | 123,0 | 1,83 | 0,13 | 1,71 | -0,15 | 29 | 0,65 |
| CE 15 | HE365FB | XT386 | 500 | 126,1 | 1,87 | 0,15 | 1,63 | -0,19 | 31 | 0,62 |
| CE 16 | HE365FB | NA-21 | 1000 | 123,1 | 1,79 | 0,10 | 1,63 | -0,19 | 67 | 0,18 |

## Claims

1. Use of a soluble $\alpha$-crystal nucleating agent selected from benzene-tris-amides, 1,3:2,4-bis-(3,4-dimethylbenzylidene) sorbitol, 1,3:2,4-dibenzy-lidensorbitol and/or bis-(3,4-dimethylbenzylidene) sorbitol showing a sequence of dissolution in heating and recrystallization in cooling, for improving the impact strength, stiffness and transparency of a polypropylene composition, which polypropylene composition comprises an isotactic propylene random copolymer showing a single-phase crystal structure as determined by electron microscopy and which isotactic propylene random copolymer comprises from 90.0 to 99.0 % by weight of propylene and from 1.0 to 10.0 % by weight of ethylene and/or higher $\alpha$-olefins with 4 to 8 carbon atoms,

   wherein said polypropylene composition has a Charpy notched impact strength $NIS_N$, a tensile modulus $TensMod_N$ and a transparency $Haze_N$ and wherein the polypropylene composition without soluble $\alpha$-crystal nuclea-ting agent has a Charpy notched impact strength $NIS_V$, a tensile modulus $TensMod_V$ and a transparency Hazev, the Charpy notched impact strength being determined in each case according to ISO 179 IeA on injection molded specimens of $80 \times 10 \times 4$ mm$^3$, the tensile modulus being determined in each case according to ISO 527-2 at +23 °C on injection molded specimen (type 1B, 4 mm thickness) and the transparency being determined in each case as haze according to ASTM D 1003-07 on injection molded plaque samples of $60 \times 60 \times 2$ mm$^3$ and wherein

   $$\Delta(NIS) = (NIS_N - NIS_V)/NIS_V \text{ and } \Delta(NIS) \geq 0.25$$

   $$\Delta(TensMod) = (TensMod_N - TensMod_V)/TensMod_V$$

   and

   $$\Delta(TensMod) \geq 0.08$$

   $$\Delta(Haze) = -(Haze_N - Haze_V)/Haze_V \text{ and } \Delta(Haze) \geq 0.50.$$

2. Use of 50 to 5000 ppm by weight of at least one soluble $\alpha$-crystal nucleating agent according to claim 1, wherein the polypropylene composition comprises at least 99% by weight or more of isotactic propylene random copolymer.

3. Use of 700 to 3000 ppm by weight of 1,3:2,4-bis-(3,4-dimethylbenzylidene) sorbitol (CAS No. 135861-56-2) as an $\alpha$-nucleating agent according to claim 1, wherein the polypropylene composition comprises at least 99% by weight or more of isotactic propylene random copolymer.

4. Use of 100 to 1000 ppm by weight of N,N',N"-tris-tert-Butyl-1,3,5-benzenetricarboxamide (CAS No. 745070-61-5) as an $\alpha$-nucleating agent according to claim 1, wherein the polypropylene composition comprises at least 99% by weight or more of isotactic propylene random copolymer.

5. Use according to any one of claims 1 to 4, wherein the polypropylene composition has a relative improvement of haze $\Delta(Haze)$ being equal to or higher than 0.55.

6. Use according to any one of claims 1 to 5, wherein the polypropylene composition has a melt flow rate $MFR_2$ from 0.5 to 200 g/10min.

7. Use according to any one of claims 1 to 6, wherein the polypropylene composition has a melting point as determined by DSC from 135 to 161°C.

## Patentansprüche

1. Verwendung eines löslichen $\alpha$-Kristall-Keimbildungsmittels, ausgewählt aus Benzol-tris-amiden, 1,3;2,4-Bis-(3,4-dimethylbenzyliden)-sorbit, 1,3;2,4-Dibenzylidensorbit und/oder Bis-(3,4-dimethylbenzyliden)-sorbit, das eine Folge von Auflösung beim Erhitzen und Rekristallisation beim Kühlen zeigt, zum Verbessern der Schlagzähigkeit, Steifigkeit und Transparenz einer Polypropylen-Zusammensetzung, wobei die Polypropylen-Zusammensetzung ein isotaktisches statistisches Propylen-Copolymer umfasst, das eine Ein-Phasen-Kristall-Struktur, wie durch Elektronen-Mikroskopie bestimmt, zeigt und wobei das isotaktische statistische Propylen-Copolymer von 90,0 bis 99,0 Gew.-% Propylen und von 1,0 bis 10,0 Gew.-% Ethylen und/oder höhere $\alpha$-Olefine mit 4 bis 8 Kohlenstoff-Atomen umfasst, wobei die Polypropylen-Zusammensetzung eine Kerbschlagzähigkeit nach Charpy $NIS_N$, einen Zugmodul $TensMod_N$ und eine Transparenz $Haze_N$ aufweist und wobei die Polypropylen-Zusammensetzung ohne lösliches $\alpha$-Kristall-Keimbildungsmittel eine Kerbschlagzähigkeit nach Charpy $NIS_V$, einen Zugmodul $TensMod_V$ und eine Transparenz $Haze_V$ aufweist, wobei die Kerbschlagzähigkeit nach Charpy in jedem Fall gemäß ISO 179 1eA an spritzgießgeformten Probestücken von 80 x 10 x 4 $mm^3$ bestimmt wird, wobei der Zugmodul in jedem Fall gemäß ISO 527-2 bei +23°C an spritzgießgeformten Probestücken von (Typ 1B, 4 mm Dicke) bestimmt wird und die Transparenz in jedem Fall als Haze-Wert gemäß ASTM D 1003-07 an spritzgießgeformten Plättchen-Proben von 60 x 60 x 2 $mm^3$ bestimmt wird und worin

$$\Delta(NIS) = (NIS_N - NIS_V)/NIS_V \text{ und } \Delta(NIS) \geq 0,25$$

$$\Delta(TensMod) = (TensMod_N - TensMod_V)/TensMod_V$$

und

$$\Delta(TensMod) \geq 0,08$$

$$\Delta(Haze) = -(Haze_N - Haze_V)/Haze_V \text{ und } \Delta(Haze) \geq 0,50.$$

**2.** Verwendung von 50 bis 5000 ppm auf das Gewicht von mindestens einem löslichen $\alpha$-Kristall-Keimbildungsmittel nach Anspruch 1, wobei die Polypropylen-Zusammensetzung mindestens 99 Gew.-% oder mehr isotaktisches statistisches Propylen-Copolymer umfasst.

**3.** Verwendung von 700 bis 3000 ppm auf das Gewicht von 1,3;2,4-Bis-(3,4-dimethylbenzyliden)-sorbit (CAS Nr. 135861-56-2) als ein $\alpha$-Keimbildungsmittel nach Anspruch 1, wobei die Polypropylen-Zusammensetzung mindestens 99 Gew.-% oder mehr isotaktisches statistisches Propylen-Copolymer umfasst.

**4.** Verwendung von 100 bis 1000 ppm auf das Gewicht von N, N', N"-Tris-tert-butyl-1, 3, 5-benzoltricarboxamid (CAS Nr. 745070-61-5) als ein $\alpha$-Keimbildungsmittel nach Anspruch 1, wobei die Polypropylen-Zusammensetzung mindestens 99 Gew.-% oder mehr isotaktisches statistisches Propylen-Copolymer umfasst.

**5.** Verwendung nach einem der Ansprüche 1 bis 4, wobei die Polypropylen-Zusammensetzung eine relative Verbesserung der Trübung $\Delta(Haze)$ aufweist, die gleich oder höher als 0,55 ist.

**6.** Verwendung nach einem der Ansprüche 1 bis 5, wobei die Polypropylen-Zusammensetzung eine Schmelze-Fließ-Rate $MFR_2$ von 0,5 bis 200 g/10 min aufweist.

**7.** Verwendung nach einem der Ansprüche 1 bis 6, wobei die Polypropylen-Zusammensetzung einen Schmelzpunkt, wie durch DSC bestimmt, von 135 bis 161°C aufweist.

**Revendications**

**1.** Utilisation d'un agent d'$\alpha$-nucléation cristalline soluble choisi parmi les benzène-tris-amides, le 1,3:2,4-bis(3,4-diméthylbenzylidène)sorbitol, le 1,3:2,4-dibenzylidènesorbitol et/ou le bis(3,4-diméthylbenzylidène)sorbitol, présentant une séquence de dissolution sous chauffage et de recristallisation sous refroidissement, pour améliorer la résistance au choc, la rigidité et la transparence d'une composition de polypropylène, laquelle composition de polypropylène comprend un copolymère statistique de propylène isotactique présentant une structure cristalline à une seule phase, telle que déterminée par microscopie électronique, et lequel copolymère statistique de propylène isotactique comprend de 90,0 à 99,0 % en poids de propylène et de 1,0 à 10,0 % en poids d'éthylène et/ou d'α-oléfines supérieures possédant 4 à 8 atomes de carbone,

dans laquelle ladite composition de polypropylène présente une résistance au choc sur barreau entaillé Charpy $NIS_N$, un module en traction $TensMod_N$ et une transparence $Hase_N$, et dans laquelle la composition de polypropylène sans agent d'α-nucléation cristalline soluble présente une résistance au choc sur barreau entaillé Charpy $NIS_V$, un module en traction $TensMod_V$ et une transparence $Haze_V$, la résistance au choc sur barreau entaillé Charpy étant déterminée dans chaque cas conformément à la norme ISO 179 1eA sur des échantillons moulés par injection de $80 \times 10 \times 4 \ mm^3$, le module en traction étant déterminé dans chaque cas conformément à la norme ISO 527-2 à +23°C sur un échantillon moulé par injection (type 1B, épaisseur 4 mm), et la transparence étant déterminée dans chaque cas par le voile conformément à la norme ASTM D 1003-07 sur des échantillons en forme de plaque moulée par injection de $60 \times 60 \times 2 \ mm^3$, et dans laquelle

$$\Delta(NIS) = (NIS_N - NIS_V)/NIS_V \text{ et } \Delta(NIS) \geq 0,25,$$

$$\Delta(TensMod) = (TensMod_N - TensMod_V)/TensMod_V,$$

et

$$\Delta(TensMod) \geq 0,08,$$

$$\Delta(Haze) = -(Haze_N - Haze_V)/Haze_V \text{ et } \Delta(Haze) \geq 0,50.$$

2. Utilisation de 50 à 5000 ppm en poids d'au moins un agent d'α-nucléation cristalline soluble selon la revendication 1, dans laquelle la composition de polypropylène comprend au moins 99 % en poids ou plus de copolymère statistique de propylène isotactique.

3. Utilisation de 700 à 3000 ppm en poids de 1,3:2,4-bis(3,4-diméthylbenzylidène)sorbitol (CAS N° 135861-56-2) en tant qu'agent d'α-nucléation selon la revendication 1, dans laquelle la composition de polypropylène comprend au moins 99 % en poids ou plus de copolymère statistique de propylène isotactique.

4. Utilisation de 100 à 1000 ppm en poids de N,N',N''-tris-tert-butyl-1,3,5-benzènetricarboxamide (CAS N° 745070-61-5) en tant qu'agent d'α-nucléation selon la revendication 1, dans laquelle la composition de polypropylène comprend au moins 99 % en poids ou plus de copolymère statistique de propylène isotactique.

5. Utilisation selon l'une quelconque des revendications 1 à 4, dans laquelle la composition de polypropylène présente une amélioration relative du voile $\Delta(Haze)$ égale ou supérieure à 0,55.

6. Utilisation selon l'une quelconque des revendications 1 à 5, dans laquelle la composition de polypropylène présente un indice de fluage $MFR_2$ de 0,5 à

7. Utilisation selon l'une quelconque des revendications 1 à 6, dans laquelle la composition de polypropylène présente un point de fusion, tel que déterminé par DSC, de 135 à 161°C.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- EP 682066 A1
- EP 885926 A2
- WO 2008088995 A1
- WO 2007045590 A1
- JP 2009299039 A
- US 5234879 A
- WO 9219653 A
- WO 9219658 A
- WO 9933843 A
- EP 887379 A1
- EP 1032599 A1
- EP 1155048 A1
- EP 2042552 A1
- EP 2030996 A1

## Non-patent literature cited in the description

- Designer nucleating agents for polypropylene. **BLOMENHOFER M. et al.** Macromolecules. Am. Chem. Soc, 2005, vol. 38
- **PÖLT et al.** *Journal of Applied Polymer Science,* 2000, vol. 78, 1152-61
- **KRISTIANSEN et al.** *Macromolecules,* 2005, vol. 38, 10461-10465
- **BALZANO et al.** *Macromolecules,* 2008, vol. 41, 5350-5355
- **A. J. BRANDOLINI ; D. D. HILLS.** NMR Spectra of Polymers and Polymer Additives. Marcel Dekker, Inc, 2000
- **S. BERGER ; S. BRAUN.** 200 and More NMR Experiments: A Practical Course. Wiley-VCH, 2004